# FASCICULE DE BREVET EUROPEEN

(11) **EP 2 815 979 B1**
(45) Date de publication et mention de la délivrance du brevet: **18.05.2016**
(21) Numéro de dépôt: 14002004.1
(22) Date de dépôt: 11.06.2014
(51) Int. Cl.: B64D 13/08, F28F 13/06, F28D 21/00, B60H 1/18, F28D 7/00, F28D 1/04

(54) **Système de chauffage de l'habitacle d'un aéronef muni d'un échangeur thermique annulaire autour de la tuyère d'échappement**
Kabinenheizsystem für Luftfahrzeug, das mit einem ringförmigen Wärmetauscher um das Strahlrohr ausgestattet ist
System for heating the passenger compartment of an aircraft provided with an annular heat exchanger around the exhaust nozzle

(30) Priorité: 18.06.2013 FR 1301413
(43) Date de publication de la demande: 24.12.2014
(73) Titulaire: Airbus Helicopters, 13725 Marignane Cedex (FR)
(72) Inventeur: Pommé, Vincent, 13127 Vitrolles (FR)
(74) Mandataire: GPI & Associés

(56) Documents cités:
- EP-A1- 0 131 508
- US-A- 2 341 549
- US-A- 3 971 511
- US-A- 4 319 630
- US-A- 4 490 989
- US-B1- 6 568 203

## Description

La présente invention se trouve dans le domaine des systèmes de chauffage de l'habitacle d'un véhicule. La présente invention concerne un système de chauffage de l'habitacle d'un véhicule muni d'un échangeur thermique annulaire situé autour d'une conduite d'échappement ainsi qu'un tel échangeur thermique annulaire positionné autour d'une conduite d'échappement. L'invention est particulièrement destinée au chauffage de l'habitacle d'un aéronef à voilure tournante.

Il est connu pour chauffer l'habitacle d'un véhicule de récupérer et d'utiliser une partie de la chaleur générée par au moins un moteur thermique de ce véhicule.

Par exemple, dans le cas des automobiles, les moteurs thermiques utilisés aujourd'hui sont majoritairement à refroidissement liquide. La chaleur transmise par le moteur thermique à ce liquide de refroidissement peut alors être utilisée au travers d'un échangeur thermique pour réchauffer l'air introduit dans l'habitacle de ce véhicule.

Par contre, cette technique est rarement utilisée en aéronautique. En effet, les aéronefs sont souvent motorisés par des turbomachines qui ne possèdent pas de système de refroidissement avec un liquide de refroidissement. D'autres techniques de chauffage de l'habitacle ont alors été mises au point pour ces aéronefs.

L'habitacle des avions volant à haute altitude est généralement pressurisé. La différence de pression entre l'air extérieur et l'air intérieur peut alors être utilisée pour générer une circulation d'air, par exemple par l'intermédiaire d'une turbine animée par cette différence de pression. Cet air peut alors être réchauffé ou refroidi pour assurer la régulation de la température de l'habitacle d'un tel avion.

Une telle solution n'est par contre pas applicable aux aéronefs dont l'habitacle n'est pas pressurisé tel que la majorité des aéronefs à voilure tournante. Dans ce cas, l'air comprimé destiné à l'alimentation de la chambre de combustion du moteur thermique de l'aéronef, et plus particulièrement d'un turbomoteur, peut être utilisé. En effet, cet air comprimé a une température généralement de l'ordre de 350°C (350 degrés Celsius) en sortie de compresseur. On peut alors prélever une partie de cet air comprimé et le mélanger avec l'air extérieur afin de chauffer l'habitacle de l'aéronef. De plus, l'utilisation de cet air comprimé assure également une excellente circulation du mélange d'air réchauffé dans l'habitacle de l'aéronef.

Cette technique est la plus utilisée actuellement sur les aéronefs à voilure tournante tels que les hélicoptères, mais présente cependant quelques inconvénients.

Tout d'abord, cette technique est reconnue comme étant une source de bruit pour l'habitacle de l'aéronef, ce bruit étant principalement dû au sifflement engendré par la détente de l'air comprimé lors de son introduction dans l'habitacle.

De plus, cet air comprimé sort du compresseur à haute température, de l'ordre de 350°C comme indiqué ci-dessus, et circule généralement dans des conduits le long du fuselage de l'aéronef. Toute rupture de ces conduits peut alors avoir des conséquences graves. De fait, ces conduits sont particulièrement sécurisés et équipés d'alarmes de détection de fuite.

Enfin, ce prélèvement d'air comprimé en sortie du compresseur d'un moteur thermique génère une perte de rendement de ce moteur thermique et, par suite, une baisse de sa puissance.

Par ailleurs, les gaz d'échappement du moteur thermique de l'aéronef sont évacués à très haute température, de l'ordre de 700°C, et peuvent donc être également une source de chaleur pour chauffer l'habitacle de l'aéronef.

On connaît par exemple le document US2341549 qui décrit un système de chauffage de l'habitacle d'un véhicule dont une première conduite dans laquelle circule l'air de l'habitacle traverse la conduite d'échappement d'un turbomoteur de ce véhicule. Cependant, afin de supprimer le risque d'une propagation des gaz d'échappement jusqu'à l'habitacle en cas de fuite de la première conduite, cette première conduite se trouve dans une conduite intermédiaire dans laquelle circule un fluide, cette conduite intermédiaire se trouvant en contact avec les gaz d'échappement. De fait, les gaz d'échappement réchauffent ce fluide se trouvant dans la conduite intermédiaire qui chauffe alors l'air destiné à l'habitacle du véhicule.

De plus, le document US3971511 décrit un système de chauffage de l'habitacle d'un aéronef. Une chambre de réchauffage d'air est positionnée au niveau du moteur thermique de cet aéronef et entoure une partie des conduites d'échappement de ce moteur. L'air se trouvant dans cette chambre de réchauffage est alors chauffé par l'intermédiaire des conduites d'échappement dans lesquelles circulent les gaz d'échappement du moteur, puis guidé vers l'habitacle par des conduites tubulaires dédiées en étant éventuellement mélangé avec de l'air extérieur. L'habitacle peut ainsi est chauffé par cet air.

En outre, le document US4490989 divulgue un système de chauffage et de climatisation de l'habitacle d'un hélicoptère. Le chauffage de l'habitacle est assuré par l'air circulant dans une conduite traversant une chambre de réchauffage d'air positionnée au niveau du moteur thermique de cet aéronef et entourant une partie des conduites d'échappement de ce moteur.

Le document US6568203 décrit quand à lui un système de fourniture d'air à température contrôlée pour un aéronef. Ce système permet de refroidir de l'air comprimé en utilisant de l'air frais à travers un échangeur thermique.

On connaît également le document US4319630 qui décrit un échangeur thermique comprenant deux jeux de tubes en forme de U. Les tubes en forme de U de chaque jeu sont de directions opposées et se font face. Deux fluides circulent de façon indépendante dans cet échangeur thermique, un fluide circulant dans l'ensemble des tubes de chaque jeu. Ainsi, un échange thermique peut avoir lieu entre ces deux fluides.

Enfin, le document EP0131508 qui divulgue toutes les caractéristiques du préambule de la revendication 1, décrit un échangeur thermique en colonne comportant des tubes verticaux. Un échange thermique est alors possible entre un premier fluide circulant autour de ces tubes verticaux et un second fluide circulant dans ces tubes. Cet échangeur thermique comporte également un dispositif de refroidissement auxiliaire formé par une ou plusieurs viroles entourant une partie des tubes verticaux, le premier fluide pouvant circuler autour de ces viroles.

Par contre, de tels systèmes de chauffage utilisent un échangeur thermique pour réchauffer l'air injecté dans l'habitacle avec les gaz d'échappement. Cet échangeur a généralement une masse et un volume non négligeables qui peuvent dégrader les performances de l'aéronef.

De plus, les gaz d'échappement sortent de la chambre de combustion du moteur thermique à grande vitesse et leur circulation dans un tel échangeur thermique peut subir des pertes de charge importantes dans cet échangeur thermique, qui entraînent alors une perte de puissance du moteur thermique.

La présente invention a alors pour objet de proposer un arrangement thermique, destiné en particulier à un système de chauffage pour un aéronef, permettant de s'affranchir des limitations mentionnées ci-dessus, ne dégradant notamment pas les performances du ou des moteurs thermiques de cet aéronef.

La présente invention a également pour objet de proposer un système de chauffage équipé d'un tel arrangement thermique et destiné à un aéronef à voilure tournante.

Selon l'invention, un arrangement thermique comporte un échangeur thermique annulaire et une conduite. L'échangeur thermique annulaire dans lequel circule un premier fluide est positionné autour de cette conduite dans laquelle circule un second fluide. Ce second fluide sort de la conduite par une ouverture de ladite conduite et un troisième fluide circule dans l'échangeur d'une entrée de l'échangeur vers une sortie de l'échangeur.

Ce système est remarquable en ce que l'échangeur comporte une enveloppe arrière située à la sortie de l'échangeur et orientant le troisième fluide vers le second fluide sortant par l'ouverture de la conduite. Le second fluide génère alors par effet « Coanda » une circulation du troisième fluide dans l'échangeur, un échange thermique ayant lieu entre la conduite, le troisième fluide et le premier fluide.

Tout d'abord, cet échangeur thermique annulaire est un échangeur thermique à fluides séparés, c'est-à-dire que les trois fluides utilisés par cet échangeur thermique circulent respectivement dans des volumes indépendants et n'ont aucun contact direct les uns avec les autres. Le premier fluide circule dans une enceinte partiellement positionnée dans l'échangeur thermique alors que le troisième fluide traverse l'échangeur thermique entre son entrée et sa sortie. Le second fluide circule dans la conduite avant de sortir de cette conduite par son ouverture.

On connaît par exemple des enceintes utilisées fréquemment dans des échangeurs thermiques et dans lesquels peut circuler le premier fluide, qui sont formées par un ou plusieurs tubes serpentant dans l'échangeur thermique ou bien par une ou plusieurs superpositions de plaques. Une surface d'échange thermique est ainsi constituée par cette enceinte permettant un échange thermique par convection entre ce premier fluide et le troisième fluide traversant l'échangeur thermique.

De plus, le premier et le troisième fluides peuvent circuler dans le même sens : on parle alors d'un échangeur thermique à co-courant, ou bien avec des sens de circulation opposés dans le cas d'un échangeur thermique à contre-courant. De préférence, les premier et troisième fluides circulent en sens opposés afin d'améliorer l'efficacité de cet échange thermique par convection.

L'arrangement thermique selon l'invention est plus particulièrement destiné à un système de chauffage pour un aéronef à voilure tournante. Cet arrangement thermique permet ainsi de chauffer l'habitacle de l'aéronef par l'intermédiaire du premier fluide, le second fluide étant constitué par les gaz d'échappement d'au moins un turbomoteur de cet aéronef et le troisième fluide étant formé par l'air ambiant entourant l'aéronef.

La forme de l'enveloppe arrière oriente le troisième fluide sortant de l'échangeur vers le second fluide sortant de la conduite. Avantageusement, la forme de cette enveloppe arrière permet que ce second fluide génère un phénomène d'entraînement du troisième fluide par « effet Coanda ». De fait, ce troisième fluide est entrainé en sortie de l'échangeur par l'écoulement du second fluide sortant de la conduite, créant ainsi une dépression à l'intérieur de l'échangeur et, par suite, une aspiration à son entrée. Une mise en circulation du troisième fluide dans l'échangeur est ainsi créée. L'enveloppe arrière peut dépasser de l'ouverture de la conduite afin d'orienter précisément le troisième fluide vers le second fluide.

L' « effet Coanda » est un phénomène de la mécanique des fluides. Par exemple, lorsqu'un fluide, qu'il soit sous forme gazeuse ou liquide, sort d'un récipient quelconque par un orifice, une partie de ce fluide a tendance, au moment où il sort, à circuler le long du contour extérieur de ce récipient.

L' « effet Coanda », s'exerce également dans le domaine des écoulements gazeux, où il peut donner lieu à des effets très importants d'entraînement d'un premier gaz qui est orienté vers un écoulement d'un second gaz. L'existence de cet « effet Coanda » dépend de quelques paramètres importants, tels que la vitesse de l'écoulement du second gaz, son débit ou bien le profil de l'orientation du premier gaz vis-à-vis de l'écoulement du second gaz.

Pour que l' « effet Coanda » se déroule dans le cas de cet arrangement thermique selon l'invention, les second et troisième fluides doivent être sous forme gazeuse, le troisième fluide correspondant au premier gaz mentionné ci-dessus étant entrainé par le second fluide correspondant au second gaz. De plus, le second fluide doit avoir une vitesse d'écoulement dans la conduite non nulle et suffisamment importante pour que cet « effet Coanda » se produise.

Avantageusement, dans le cas d'un aéronef à voilure tournante muni d'un ou plusieurs turbomoteurs, les gaz d'échappement sortent d'une conduite d'échappement avec une vitesse élevée, de l'ordre de 40 à 80 m/s environ (40 à 80 mètres par seconde) selon le régime moteur, ce qui est très favorable à l'apparition de cet « effet Coanda ». De plus, l'entrainement de l'air ambiant constituant le troisième fluide par les gaz d'échappement formant le second fluide, qui est ainsi créé, permet avantageusement une circulation du troisième fluide dans l'échangeur indépendamment de la vitesse d'avancement de l'aéronef. Ainsi, une circulation du troisième fluide dans l'échangeur est assurée quelque soit la phase de vol de l'aéronef à voilure tournante, y compris lors de vol stationnaires, verticaux ou encore latéraux.

Par ailleurs, la forme de l'enveloppe arrière doit être définie avec soin afin d'orienter le second fluide de manière adéquate pour que cet « effet Coanda » apparaisse. Notamment, cette enveloppe arrière doit être en contact avec une partie périphérique de l'écoulement du second fluide en sortie de la conduite. Cette enveloppe arrière doit donc dépasser de la conduite et peut présenter une forme convergente pour amener le troisième fluide en contact avec le second fluide. Une zone de mélange entre le second fluide et le troisième fluide apparait alors.

Cette circulation du troisième fluide dans l'échangeur favorise ainsi un échange thermique par convection entre le troisième fluide et le premier fluide, par l'intermédiaire de la surface d'échange constituée par la surface de l'enceinte dans laquelle circule le premier fluide. La circulation de ce premier fluide peut être assurée par un moyen de mise en circulation, telle une pompe ou une turbine, situé dans cette enceinte. Ce moyen de mise en circulation est de préférence positionné en dehors de l'arrangement thermique selon l'invention.

De même, le second fluide circulant dans la conduite autour de laquelle est positionné l'échangeur, un échange thermique par convection entre la conduite et le troisième fluide peut avoir lieu par l'intermédiaire de la surface d'échange constituée par la surface de cette conduite.

De plus, la surface de la conduite peut également transférer une partie de sa chaleur par rayonnement. De fait, un échange thermique par rayonnement entre la conduite et le premier fluide circulant dans l'échangeur peut avoir lieu. De même, un échange thermique par rayonnement peut avoir lieu entre la conduite et le troisième fluide.

Par contre, pour recevoir de la chaleur transférée par rayonnement, un fluide doit avoir un coefficient d'absorption non nul. Dans la plupart des applications de l'arrangement thermique selon l'invention et notamment dans le cas de l'application au chauffage de l'habitacle d'un aéronef à voilure tournante, le troisième fluide est l'air et est donc transparent. Dans ce cas, le troisième fluide ne peut pas recevoir d'énergie thermique par rayonnement, son coefficient d'absorption étant nul.

Avantageusement, en combinant des échanges thermiques par rayonnement et par convection, l'échangeur thermique annulaire de l'arrangement thermique selon l'invention peut avoir une grande capacité d'échanges thermiques.

Par exemple et comme exposé ci-dessous, dans un aéronef à voilure tournante, les gaz d'échappement d'un turbomoteur circulent dans la conduite d'échappement avec une température élevée, de l'ordre de 700°C. Par suite, la conduite d'échappement s'échauffe également et peut transmettre une partie de la chaleur emmagasinée par rayonnement autour de cette conduite et notamment à l'échangeur thermique annulaire situé autour de cette conduite d'échappement.

Par suite, un échange thermique se produit d'une part par rayonnement entre la conduite et le premier fluide et d'autre part par convection entre la conduite et le troisième fluide.

Cependant, ces échanges thermiques par rayonnement et par convection peuvent être importants lorsque la température du second fluide est élevée par rapport au premier fluide et/ou au troisième fluide.

C'est notamment le cas pour l'application de l'arrangement thermique selon l'invention à un système de chauffage d'un aéronef à voilure tournante, les gaz d'échappement d'un turbomoteur de cet aéronef pouvant être à une température très élevée par rapport à l'air ambiant. Il peut être alors intéressant de limiter ces échanges thermiques afin de limiter la température atteinte par le premier fluide.

Dans ce but, une protection thermique peut être positionnée au moins partiellement entre la conduite et l'échangeur thermique annulaire afin de limiter l'échange thermique obtenu d'une part par rayonnement entre la conduite et le premier fluide et d'autre part par convection entre la conduite et le troisième fluide. Cette protection thermique peut par exemple comporter au moins un écran thermique.

Selon un premier mode de réalisation de l'arrangement thermique selon l'invention, la protection thermique a une efficacité thermique qui augmente de l'entrée de l'échangeur vers la sortie de l'échangeur. On entend par efficacité thermique d'une protection thermique la capacité de cette protection thermique à limiter l'échange thermique entre les deux zones séparées par cette protection thermique.

Par exemple, un seul premier écran thermique est positionné au niveau de l'entrée de l'échangeur thermique annulaire alors que deux écrans thermiques, identiques au premier écran thermique, sont positionnés au centre de l'échangeur. De même, trois écrans thermiques, identiques au premier écran thermique, sont positionnés à proximité de la sortie de l'échangeur.

Cette variation de l'efficacité thermique de la protection thermique peut également être obtenue par une variation de l'épaisseur de cette protection thermique en fonction de la position de cette protection thermique dans l'échangeur thermique annulaire. Plus précisément, pour ce premier mode de réalisation, la protection thermique peut être formée par un seul écran thermique dont l'épaisseur augmente de l'entrée de l'échangeur thermique annulaire jusqu'à sa sortie.

Un tel écran thermique peut être constitué par un matériau de type mousse métallique en acier ou en cuivre, ainsi que par des plaques cylindriques concentriques ou encore une structure en nid d'abeille qui peuvent être par exemple en inox, en titane ou bien en matériaux graphites.

Dans le cas d'un système de chauffage destiné à un aéronef à voilure tournante et comportant un arrangement thermique dont l'échangeur thermique annulaire positionné autour d'une conduite d'échappement, la température du troisième fluide constitué par l'air ambiant rentrant dans l'échangeur est sensiblement égale à la température ambiante.

De fait, à l'entrée de l'échangeur, ce troisième fluide ne réchauffe pas significativement le premier fluide. L'échange thermique est alors obtenu essentiellement d'une part par rayonnement entre la conduite et le premier fluide et d'autre part par convection entre la conduite et le troisième fluide dans une zone d'entrée de l'échangeur. Cette zone d'entrée est formée par une première zone située dans l'échangeur et juste après l'entrée de l'échangeur suivant le sens de circulation du troisième fluide. De même, une zone de sortie est formée par une seconde zone située dans l'échangeur et juste avant la sortie de l'échangeur.

Dans une zone centrale de l'échangeur située entre la zone d'entrée et la zone de sortie, le troisième fluide a été réchauffé par convection dans la zone d'entrée et peut alors réchauffer le premier fluide par convection. Par suite, l'échange thermique par rayonnement est réduit par l'augmentation de l'efficacité de la protection thermique. Dans la zone de sortie, le troisième fluide ayant encore été réchauffé dans la zone centrale, la part de l'échange thermique par convection entre le premier fluide et le troisième fluide devient de plus en plus importante. De plus, les échanges thermiques entre la conduite et d'une part le premier fluide par rayonnement et d'autre part le troisième fluide par convection sont encore réduits par l'augmentation de l'efficacité de la protection thermique.

Ainsi dans ce premier mode de réalisation de l'arrangement thermique selon l'invention, l'échange thermique est essentiellement obtenu d'une part par rayonnement entre la conduite et le premier fluide et d'autre part par convection entre la conduite et le troisième fluide dans la zone d'entrée de l'échangeur, la capacité de réduction de la température par la protection thermique étant faible. Ensuite, au niveau de la zone centrale et de la zone de sortie de l'échangeur, l'échange thermique est obtenu d'une part par rayonnement entre la conduite et le premier fluide et d'autre part par convection entre la conduite et le troisième fluide ainsi qu'entre le troisième fluide et le premier fluide, la capacité de réduction de la température par la protection thermique augmentant progressivement.

Selon un second mode de réalisation de l'arrangement thermique selon l'invention, l'échangeur comporte une enveloppe avant située à l'entrée de l'échangeur et délimitant la zone d'entrée. L'échange thermique est uniquement obtenu, dans cette zone avant de l'échangeur, par convection entre la conduite et le troisième fluide, le premier fluide ne circulant pas dans cette zone avant. Aucune protection thermique n'est positionnée dans cette zone avant afin que l'échange thermique par rayonnement soit maximum entre la conduite et le troisième fluide.

Ensuite, une protection thermique est agencée au-delà de cette zone avant de l'échangeur dans les zones centrale et de sortie de cet échangeur dans lesquelles le premier fluide circule. Cette protection thermique a une efficacité thermique qui diminue alors jusqu'à la sortie de l'échangeur. Ainsi, dans la zone centrale de l'échangeur, où démarre la circulation du premier fluide, l'échange thermique est essentiellement obtenu par convection entre le troisième fluide et le premier fluide, la majorité de l'échange thermique venant de la conduite, que ce soit par rayonnement ou bien par convection, étant stoppé par la protection thermique. Ensuite, dans la zone de sortie de l'échangeur par exemple, l'échange thermique par convection entre le troisième fluide et le premier fluide devient moins efficace, l'échange thermique entre la conduite et troisième fluide étant faible. Avantageusement, l'échange thermique venant de la conduite, notamment par rayonnement avec le premier fluide, augmente progressivement afin de compenser cette diminution de l'échange thermique par convection entre le troisième fluide et le premier fluide, l'efficacité thermique de la protection thermique diminuant progressivement.

De fait, selon ce second mode de réalisation de l'arrangement thermique selon l'invention, l'échange thermique est uniquement obtenu par convection entre la conduite et le troisième fluide dans la zone d'entrée de l'échangeur. Puis dans la zone centrale, l'échange thermique est obtenu en partie par convection entre le troisième fluide et le premier fluide et en partie par rayonnement entre la conduite et le premier fluide. Ensuite, la part d'échange thermique venant de la conduite, que ce soit par rayonnement ainsi que par convection, augmente progressivement et proportionnellement à la diminution de l'efficacité thermique de la protection thermique alors que la part d'échange thermique par convection entre le troisième fluide et le premier fluide diminue.

La présente invention a aussi pour objet un système de chauffage d'un véhicule, le véhicule étant muni d'un habitacle et d'au moins un moteur thermique, le système de chauffage comportant une tuyauterie dans laquelle circule un fluide caloporteur, au moins un élément de chauffage dans lequel circule ce fluide caloporteur afin d'assurer le chauffage de l'habitacle et au moins un moyen de mise en circulation de ce fluide caloporteur.

Ce système de chauffage comporte un arrangement thermique comme précédemment évoqué permettant ainsi de réchauffer le fluide caloporteur, ce fluide caloporteur étant le premier fluide circulant dans l'échangeur thermique annulaire de cet arrangement thermique.

Ce système de chauffage est particulièrement adapté aux aéronefs à voilure tournante disposant d'au moins un turbomoteur. L'échangeur thermique annulaire est alors positionné autour d'au moins une tuyère d'échappement d'un turbomoteur et le second fluide est constitué par les gaz d'échappement de ce turbomoteur.

Avantageusement, ce système de chauffage ne dégrade pas les performances du ou des turbomoteurs de l'aéronef qu'il équipe.

En effet, ce système de chauffage n'effectue aucun prélèvement au niveau de l'air comprimé sortant du compresseur du turbomoteur.

De plus, aucun élément ne perturbant le débit des gaz d'échappement, aucune perte de charge supplémentaire n'est générée par l'échangeur thermique annulaire de ce système de chauffage sur l'écoulement des gaz d'échappement.

En outre, aucun élément ne se trouve en contact direct avec les gaz d'échappement et n'est donc soumis à la haute température de ces gaz d'échappement. Aucun élément ne nécessite donc de caractéristiques mécaniques importantes permettant ainsi de réduire le coût ainsi que la masse de ce système de chauffage.

Par ailleurs, il est important d'éviter une circulation d'un fluide à haute température le long du fuselage de l'aéronef. Le premier fluide est alors choisi pour avoir une température de circulation modérée et suffisante pour permettre le chauffage de l'habitacle de l'aéronef. Le premier fluide est par exemple un fluide caloporteur liquide dont la température de circulation est de l'ordre de 80 à 100°C.

De plus, la protection thermique limitant l'échange thermique par rayonnement permet de limiter la température de la partie interne de l'échangeur, par exemple à une température d'environ de 100 à 120°C de manière à pouvoir chauffer le premier fluide à une température d'environ 80 à 100°C.

Il est ainsi avantageux de pouvoir limiter la température de la partie interne de l'échangeur à une valeur compatible avec ce premier fluide afin notamment d'en stopper la circulation lorsqu'il n'y a pas de besoin de chauffage dans l'habitacle de l'aéronef. Cette limitation est assurée par la présence de la protection thermique combinée à la circulation de l'air généré par l' « effet Coanda ». Cette température de la partie interne de l'échangeur est par exemple limitée à 250°C environ.

Par contre, il peut être nécessaire de continuer à faire circuler le premier fluide avec un minimum de débit, y compris lorsqu'il n'y a pas de besoin de chauffage dans l'habitacle de l'aéronef, afin d'éviter que sa température soit trop élevée. Il est alors nécessaire de prévoir dans ce cas un dispositif supplémentaire pour évacuer une partie de la chaleur de ce premier fluide vers le milieu extérieur, par l'intermédiaire par exemple d'un autre échangeur ou bien de trouver une autre utilisation de cette chaleur disponible.

L'invention et ses avantages apparaîtront avec plus de détails dans le cadre de la description qui suit avec des exemples de réalisation donnés à titre illustratif en référence aux figures annexées qui représentent :
- la figure 1, un aéronef à voilure tournante équipé d'un système de chauffage de son habitacle,
- la figure 2, un premier mode de réalisation d'un arrangement thermique équipant ce système de chauffage, et
- la figure 3, un second mode de réalisation d'un arrangement thermique équipant ce système de chauffage.

Les éléments présents dans plusieurs figures distinctes sont affectés d'une seule et même référence.

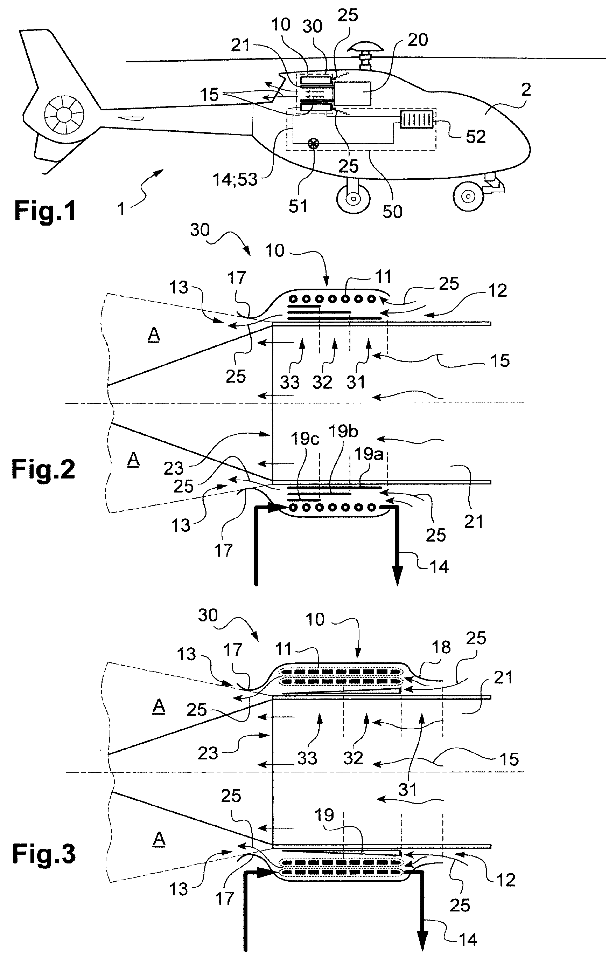

La figure 1 représente un aéronef 1 à voilure tournante muni notamment d'un habitacle 2, d'un turbomoteur 20, d'une conduite d'échappement 21 et d'un système de chauffage 50. Ce système de chauffage 50 comporte un premier fluide 14 circulant dans une tuyauterie 53, un moyen de mise en circulation 51 de ce premier fluide 14, un élément de chauffage 52 et un arrangement thermique 30 muni d'un échangeur thermique annulaire 10 et d'une conduite d'échappement 21. Ce premier fluide 14 est un fluide caloporteur qui est chauffé dans l'échangeur thermique annulaire 10 et qui peut ainsi réchauffer l'habitacle 2 de l'aéronef 1 par l'intermédiaire de l'élément de chauffage 52.

Les figures 2 et 3 représentent deux modes de réalisation de cet arrangement thermique 30.

Quel que soit le mode de réalisation, l'échangeur thermique annulaire 10 est positionné autour de la conduite d'échappement 21 de l'aéronef 1 dans laquelle circule un second fluide 15 formé par les gaz d'échappement du turbomoteur 20. Cette conduite d'échappement 21 est généralement de forme sensiblement cylindrique.

L'échangeur thermique annulaire 10 comporte une enceinte 11 reliée à la tuyauterie 53 et dans laquelle circule le premier fluide 14 ainsi qu'une entrée 12 et une sortie 13 par lesquelles un troisième fluide 25 entre et sort de cet échangeur thermique annulaire 10. Ainsi, la surface externe de l'enceinte 11 constitue une surface d'échange thermique entre le premier fluide 14 et le troisième fluide 25. Par suite, un échange thermique par convection peut, entre autres, avoir lieu entre le premier fluide 14 et le troisième fluide 25. Ce troisième fluide 25 est l'air ambiant entourant l'aéronef 1.

L'échangeur thermique annulaire 10 comporte également une enveloppe arrière 17 orientant l'air ambiant 25 sortant par la sortie 13 de l'échangeur 10 vers les gaz d'échappement 15 sortant de l'ouverture 23 de la conduite 21. La forme de cette enveloppe arrière 17 permet que les gaz d'échappement 15 génèrent un phénomène d'entraînement de l'air ambiant 25 par « effet Coanda ». De fait, l'air ambiant 25 est entrainé en sortie 13 de l'échangeur 10 par l'écoulement des gaz d'échappement 15 sortant de la conduite 21, créant une dépression à l'intérieur de l'échangeur 10 et, par suite, une aspiration de l'air ambiant 15 à l'entrée 12 de l'échangeur 10. Ainsi, une mise en circulation de l'air ambiant 15 dans l'échangeur 10 est ainsi créée.

L'enveloppe arrière 17 doit être en contact avec une partie périphérique de l'écoulement des gaz d'échappement 15 en sortie de la conduite 21, comme représenté sur les figures 2 et 3. Cette enveloppe arrière 17 dépasse alors de l'ouverture 23 de la conduite 21 afin d'orienter précisément l'air ambiant 15 vers les gaz d'échappement 15. Cette enveloppe arrière 17 présente une forme convergente pour amener l'air ambiant 25 en contact avec les gaz d'échappement 15. Une zone A de mélange entre l'air ambiant 25 et les gaz d'échappement 15 apparait alors.

De plus, les gaz d'échappement 15 circulant dans la conduite 21 sont très chauds, de l'ordre de 700°C, et sortent de la conduite 21 par l'ouverture 23. De fait, la conduite 21 est chaude également. Par suite, un échange thermique peut avoir lieu d'une part par rayonnement entre la conduite 21 et le premier fluide 14 par l'intermédiaire de la surface d'échange thermique de l'enceinte 11 et d'autre part par convection entre la conduite 21 et le troisième fluide 25.

Cependant, l'échangeur thermique annulaire 10 équipe un système de chauffage 50 et le premier fluide 14 alimente un élément de chauffage 52. La température de ce premier fluide 14 ne doit donc pas être excessive afin d'une part de ne pas trop chauffer l'habitacle 2 de l'aéronef 1 et d'autre part que la température de la tuyauterie 53 dans laquelle circule le premier fluide 14 ne soit pas excessive. Dans ce but, l'échangeur thermique annulaire 10 comporte une protection thermique positionnée au moins partiellement entre la conduite 21 et l'échangeur thermique annulaire 10. Les échanges thermiques de la conduite 21, que ce soit par rayonnement ou par convection, peuvent ainsi être limités. Cette protection thermique comporte au moins un écran thermique 19 et peut être constituée par un matériau de type mousse métallique par exemple en acier ou en cuivre ainsi que par des plaques cylindriques concentriques ou bien par une structure en nid d'abeille réalisées par exemple en inox, en titane ou bien en matériaux graphites.

En outre, l'échangeur thermique annulaire 10 comporte trois zones 31,32,33. Une zone d'entrée 31 est située juste après l'entrée 12 de l'échangeur 10 selon le sens de circulation de l'air ambiant 25 dans l'échangeur 10 et une zone de sortie 33 est située juste avant la sortie 13 de l'échangeur 10. Une zone centrale 32 est située entre les zones d'entrée 31 et de sortie 33.

Selon un premier mode de réalisation de l'arrangement thermique 30 représenté sur la figure 2, la protection thermique de l'échangeur thermique annulaire 10 est formée par trois écrans thermiques 19a,19b,19c,. Un premier écran thermique 19a couvre les trois zones 31,32,33 alors qu'un second écran thermique 19b couvre uniquement les zones centrale 32 et de sortie 33. Un troisième écran thermique 19c couvre uniquement la zone de sortie 33. Ces trois écrans thermiques 19a,19b,19c ont la même efficacité thermique, étant par exemple constitués par le même matériau et ayant la même épaisseur. De plus, l'enceinte 11 dans laquelle le premier fluide 14 circule se situe dans les trois zones 31,32,33. Cette enceinte 11 est de forme tubulaire et constituée d'un ou plusieurs tubes serpentant dans l'échangeur thermique annulaire 10.

Ainsi, dans la zone d'entrée 31, l'échangeur 10 comporte un seul écran thermique 19a. Par suite, l'échange thermique de la conduite 21 est important permettant de chauffer d'une part par rayonnement le premier fluide 14 circulant dans l'enceinte 11 et d'autre part par convection l'air ambiant 25 circulant dans l'échangeur 10. Par contre, l'air ambiant 25 venant d'entrer dans l'échangeur 10 a une température proche de la température extérieure de l'aéronef 1 et ne réchauffe donc pas le premier fluide 14 par convection.

Ensuite, dans la zone centrale 32, l'échangeur 10 comporte deux écrans thermiques 19a,19b. Par suite, l'échange thermique de la conduite 21 est plus faible que dans la zone d'entrée 31. Il permet cependant de chauffer par rayonnement le premier fluide 14 et par convection l'air ambiant 25 circulant dans l'échangeur 10. De plus, l'air ambiant 25 ayant été réchauffé par rayonnement dans la zone d'entrée 31 peut réchauffer le premier fluide 14 par convection.

Enfin, dans la zone de sortie 33, l'échangeur 10 comporte trois écrans thermiques 19a,19b,19c. Par suite, l'échange thermique de la conduite 21 est encore diminué par rapport aux zones d'entrée 31 et centrale 32. Il peut cependant chauffer légèrement par rayonnement le premier fluide 14 et par convection l'air ambiant 25 circulant dans l'échangeur 10, le premier fluide 14 étant essentiellement réchauffé par convection de l'air ambiant 25.

Ainsi, la protection thermique de l'échangeur thermique annulaire 10 selon ce premier mode de réalisation a une efficacité thermique qui augmente de l'entrée 12 de l'échangeur 10 vers sa sortie 13.

Selon un second mode de réalisation de l'arrangement thermique 30 représenté sur la figure 3, aucune protection n'est présente dans la zone d'entrée 31 alors que la protection thermique de l'échangeur thermique annulaire 10 est formée par un seul écran thermique 19 dans les zones centrale 32 et de sortie 33. De plus, l'épaisseur de cet écran thermique 19 diminue de la zone centrale 32 vers la zone de sortie 33, l'enceinte 11 dans laquelle le premier fluide 14 circule se situant uniquement dans les zones centrale 32 et de sortie 33. Cette enceinte 11 est constituée par une ou plusieurs superpositions de plaques. En outre, une enveloppe avant 18 forme l'entrée 12 de l'échangeur 10 et cette zone d'entrée 31.

Ainsi, dans la zone d'entrée 31, seul l'air ambiant 25 circule. De fait, un échange thermique par convection entre la conduite 21 et l'air ambiant 25 se produit. De plus cet échange thermique par convection est maximum, aucune protection thermique n'étant présente dans cette zone d'entrée 31.

Ensuite, dans la zone centrale 32, le premier fluide 14 circule dans l'enceinte 11 et l'air ambiant 25 réchauffé dans la zone d'entrée 31 circule dans l'échangeur 10. Par suite, l'échange thermique est essentiellement obtenu par convection entre l'air ambiant 25 réchauffé dans la zone d'entrée 31 et le premier fluide 14, la majorité de l'échange thermique de la conduite 21 étant stoppé par l'écran thermique 19 dont l'épaisseur est importante dans la zone centrale 32. Cependant, un échange thermique d'une part par rayonnement entre la conduite 21 et le premier fluide 14 et d'autre part par convection entre la conduite 21 et l'air ambiant 25 se produit tout de même.

Enfin, dans la zone de sortie 33, l'échange thermique par convection entre l'air ambiant 25 et le premier fluide 14 diminue. En effet, la chaleur emmagasinée par l'air ambiant 25 dans la zone d'entrée 31 a été en grande partie transmise au premier fluide 14 dans la zone centrale 32. Par contre, l'épaisseur de l'écran thermique 19 étant plus faible dans cette zone de sortie 33, l'échange thermique de la conduite 21 augmente de façon substantielle. Ainsi, dans cette zone de sortie 33, l'échange thermique se produit majoritairement de la conduite 21 permettant de chauffer d'une part par rayonnement le premier fluide 14 et d'autre part par convection l'air ambiant 25 et également de façon réduite par convection entre l'air ambiant 25 et le premier fluide 14.

Par ailleurs, quel que soit le mode de réalisation de l'arrangement thermique 30 selon l'invention, la protection thermique limitant l'échange thermique de la conduite 21 dans l'échangeur 10 permet de limiter la température du premier fluide 14 à une température d'environ 80 à 100°C lorsque celui-ci circule dans la tuyauterie 53 lors du chauffage de l'habitacle 2 de l'aéronef 1, la partie interne de cet échangeur 10 ayant une température de l'ordre de 100 à 120°C.

Par contre, lorsqu'il n'y a pas de besoin de chauffage dans l'habitacle 2 de l'aéronef 1, la circulation du premier fluide 14 peut être stoppée ou bien son débit réduit, la température de la partie interne de l'échangeur 10 est alors limitée par exemple à 250°C environ grâce à la présence de la protection thermique. Dans ce cas, la température du premier fluide 14 peut être supérieure à sa température de fonctionnement qui est de l'ordre de 80 à 100°C comme évoqué précédemment, sans pour autant dépasser la température maximum admissible par ce premier fluide 14.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention. Notamment le nombre d'écrans thermiques 19 présents dans les deux modes de réalisation décrits n'est pas limitatif, ce nombre d'écrans thermiques 19 pouvant être différent suivant le mode de réalisation de l'invention.

## Revendications

1. Arrangement thermique (30) comportant un échangeur thermique annulaire (10) et une conduite (21), ledit échangeur (10) dans lequel circule un premier fluide (14) étant positionné autour de ladite conduite (21) dans laquelle circule un second fluide (15), ledit second fluide (15) sortant de ladite conduite (21) par une ouverture (23) de ladite conduite (21), un troisième fluide (25) circulant dans ledit échangeur (10) d'une entrée (12) dudit échangeur (10) vers une sortie (13) dudit échangeur (10),
**caractérisé en ce que** ledit échangeur (10) comporte une enveloppe arrière (17) située à ladite sortie (13) et orientant ledit troisième fluide (25) vers ledit second fluide (15) sortant par ladite ouverture (23), le second fluide (15) générant alors par effet « Coanda » une circulation dudit troisième fluide (25) dans ledit échangeur (10), un échange thermique ayant lieu entre ladite conduite (21), ledit troisième fluide (25) et ledit premier fluide (14).

2. Arrangement thermique (30) selon la revendication 1,
**caractérisé en ce que** ledit échange thermique est constitué au moins par un échange thermique par convection entre ladite conduite (21) et ledit troisième fluide (25).

3. Arrangement thermique (30) selon l'une quelconque des revendications 1 à 2,
**caractérisé en ce que** ledit échange thermique est constitué au moins par un échange thermique par rayonnement entre ladite conduite (21) et ledit premier fluide (14).

4. Arrangement thermique (30) selon l'une quelconque des revendications 1 à 3,
**caractérisé en ce que** ledit échange thermique est constitué au moins par un échange thermique par convection entre ledit troisième fluide (25) et ledit premier fluide (14).

5. Arrangement thermique (30) selon l'une quelconque des revendications 1 à 4,
**caractérisé en ce que** ledit échangeur (10) comporte une protection thermique (19) positionnée au moins partiellement entre ladite conduite (21) et ledit échangeur (10) afin de limiter ledit échange thermique de ladite conduite (21).

6. Arrangement thermique (30) selon la revendication 5,
**caractérisé en ce que** ladite protection thermique (19) est constituée par au moins un écran thermique formé d'un ou plusieurs éléments choisis parmi une liste comportant un matériau de type mousse métallique, des plaques cylindriques concentriques, une structure en nid d'abeille.

7. Arrangement thermique (30) selon l'une quelconque des revendications 5 à 6,
**caractérisé en ce que** ladite protection thermique (19) a une efficacité thermique qui augmente de ladite entrée (12) vers ladite sortie (13), ledit échange thermique étant essentiellement obtenu d'une part par rayonnement entre ladite conduite (21) et ledit premier fluide (14) et d'autre part par convection entre ladite conduite (21) et ledit troisième fluide (25) dans une zone d'entrée (31) dudit échangeur (10) alors qu'au-delà de ladite zone d'entrée (31), ledit échange thermique est obtenu par rayonnement entre ladite conduite (21) et ledit premier fluide (14), par convection entre ladite conduite (21) et ledit troisième fluide (25) et par convection entre ledit troisième fluide (25) et ledit premier fluide (14), ladite zone d'entrée (31) étant formée par une zone située dans ledit échangeur (10) juste après ladite entrée (12) selon le sens de circulation dudit troisième fluide (25) dans ledit échangeur (10).

8. Arrangement thermique (30) selon l'une quelconque des revendications 1 à 6,
**caractérisé en ce que** ledit échangeur (10) comportant dans une zone d'entrée (31) dudit échangeur (10) une enveloppe avant (18), l'échange thermique est uniquement obtenu dans ladite zone d'entrée (31) par convection entre ladite conduite (21) et ledit troisième fluide (25), ladite zone d'entrée (31) étant formée par une zone située dans ledit échangeur (10) juste après ladite entrée (12) selon le sens de circulation dudit troisième fluide (25) dans ledit échangeur (10), ledit premier fluide (14) ne circulant pas dans ladite zone d'entrée (31).

9. Arrangement thermique (30) selon la revendication 8,
**caractérisé en ce que**, ledit échangeur (10) comportant une protection thermique (19) positionnée au moins partiellement entre ladite conduite (21) et ledit échangeur (10), ladite protection thermique (19) a une efficacité thermique qui démarre au-delà de ladite zone d'entrée (31) et diminue jusqu'à ladite sortie (13), ledit échange thermique étant uniquement obtenu par convection entre ladite conduite (21) et ledit troisième fluide (25) dans ladite zone d'entrée (31), puis au-delà de ladite zone d'entrée (31) ledit échange thermique étant obtenu par rayonnement entre ladite conduite (21) et ledit premier fluide (14), par convection entre ladite conduite (21) et ledit troisième fluide (25) et par convection entre ledit troisième fluide (25) et ledit premier fluide (14).

10. Arrangement thermique (30) selon l'une quelconque des revendications 1 à 9,
**caractérisé en ce que** ladite enveloppe arrière (17) présente une forme convergente qui est en contact avec une partie périphérique d'un écoulement dudit second fluide (15) en sortie de ladite conduite (21) et qui dépasse de ladite conduite (21) afin d'amener ledit troisième fluide (25) en contact avec ledit second fluide (15).

11. Arrangement thermique (30) selon l'une quelconque des revendications 1 à 10,
**caractérisé en ce que** ledit troisième fluide (25) est l'air ambiant.

12. Arrangement thermique (30) selon l'une quelconque des revendications 1 à 11,
**caractérisé en ce que** ladite conduite (21) est une conduite (21) d'échappement des gaz d'échappement d'un moteur thermique (20) et ledit second fluide (15) est formé par lesdits gaz d'échappement.

13. Système de chauffage (50) d'un véhicule (1), ledit véhicule (1) étant muni d'un habitacle (2) et d'au moins un moteur thermique (20), ledit système de chauffage (50) comportant au moins une tuyauterie (53) dans laquelle circule un fluide caloporteur, un moyen de mise en circulation (51) dudit fluide caloporteur et au moins un élément de chauffage (52) dans lequel circule ledit fluide caloporteur afin d'assurer le chauffage dudit habitacle (2),
**caractérisé en ce que** ledit système de chauffage (50) comporte un arrangement thermique (30) selon la revendication 12 permettant de réchauffer ledit fluide caloporteur, ledit fluide caloporteur étant ledit premier fluide (14) dudit échangeur (10).

14. Système de chauffage (50) selon la revendication 13,
**caractérisé en ce que** ledit véhicule (1) est un aéronef à voilure tournante, ledit moteur thermique (20) est un turbomoteur et ladite conduite (21) est constituée d'au moins une tuyère d'échappement d'au moins un turbomoteur (20).

## Patentansprüche

1. Thermische Anordnung (30) mit einem ringförmigen Wärmetauscher (10) und einer Leitung (21), wobei der Wärmetauscher (10), in dem ein erstes Fluid (14) fließt, um die Leitung (21) herum angeordnet ist, in der ein zweites Fluid (15) fließt, wobei das zweite Fluid (15) aus der Leitung (21) durch eine Öffnung (23) der Leitung (21) austritt, wobei ein drittes Fluid (25) in dem Wärmetauscher (10) von einem Eingang (12) des Wärmetauschers (10) zu einem Ausgang (13) des Wärmetauschers (10) fließt,
**dadurch gekennzeichnet, dass** der Wärmetauscher (10) eine hintere Hülle (17) aufweist, die an dem Ausgang (13) angeordnet ist, und das dritte Fluid (25) zu dem zweiten Fluid (15) leitet, das aus der Öffnung (23) austritt, wobei das zweite Fluid (15) durch den "Coanda"-Effekt ein Fließen des dritten Fluids (25) in dem Wärmetauscher (10) bewirkt, wobei ein Wärmetausch stattfindet zwischen der Leitung (21), dem dritten Fluid (25) und dem ersten Fluid (14).

2. Thermische Anordnung (30) nach Anspruch 1,
**dadurch gekennzeichnet, dass** der Wärmetausch mindestens aus einem thermischen Austausch durch Konvektion zwischen der Leitung (21) und dem dritten Fluid (25) besteht.

3. Thermische Anordnung (30) nach einem der Ansprüche 1 bis 2,
**dadurch gekennzeichnet, dass** der Wärmetausch mindestens aus einem thermischen Austausch durch Strahlung zwischen der Leitung (21) und dem ersten Fluid (14) besteht.

4. Thermische Anordnung (30) nach einem der Ansprüche 1 bis 3,
**dadurch gekennzeichnet, dass** der thermische Austausch mindestens aus einem thermischen Austausch durch Konvektion zwischen dem dritten Fluid (25) und dem ersten Fluid (14) besteht.

5. Thermische Anordnung (30) nach einem der Ansprüche 1 bis 4,
**dadurch gekennzeichnet, dass** der Wärmetauscher (10) einen thermischen Schutz (19) aufweist, der mindestens teilweise zwischen der Leitung (21) und dem Wärmetauscher (10) angeordnet ist, um den thermischen Austausch der Leitung (21) zu begrenzen.

6. Thermische Anordnung (30) nach Anspruch 5,
**dadurch gekennzeichnet, dass** der thermische Schutz (19) aus mindestens einem thermischen Schutzschild besteht, der gebildet ist aus einem oder mehreren Elementen, die aus einer Liste ausgewählt sind, die umfasst: ein Material vom Typ Metallschaum, konzentrische, zylinderförmige Platten, eine Bienenwabenstruktur.

7. Thermische Anordnung (30) nach einem der Ansprüche 5 bis 6,
**dadurch gekennzeichnet, dass** der thermische Schutz (19) einen thermischen Wirkungsgrad aufweist, der von dem Eingang (12) zum Ausgang (13) steigt, wobei der thermische Austausch im Wesentlichen erhalten wird, einerseits durch die Strahlung zwischen der Leitung (21) und dem ersten Fluid (14) und andererseits durch Konvektion zwischen der Leitung (21) und dem dritten Fluid (25) in einem Eingangsbereich (31) des Wärmetauschers (10), während außerhalb des Eingangsbereichs (31) der thermische Austausch erhalten wird durch Strahlung zwischen der Leitung (21) und dem ersten Fluid (14) durch Konvektion zwischen der Leitung (21) und dem dritten Fluid (25) und durch Konvektion zwischen dem dritten Fluid (25) und dem ersten Fluid (14), wobei der Eingangsbereich (31) gebildet wird durch einen Bereich, der in dem Wärmetauscher (10) gleich hinter dem Eingang (12) in Flussrichtung des dritten Fluids (25) im Wärmetauscher (10) liegt.

8. Thermische Anordnung (30) nach einem der Ansprüche 1 bis 6,
**dadurch gekennzeichnet, dass** der Wärmetauscher (10) in einem Eingangsbereich (31) des Wärmetauschers (10) eine vordere Hülle (18) aufweist, wobei der thermische Austausch ausschließlich in dem Eingangsbereich (31) durch Konvektion zwischen der Leitung (21) und dem dritten Fluid (25) erhalten wird, wobei der Eingangsbereich (31) durch einen Bereich gebildet wird, der in dem Wärmetauscher (10) direkt hinter dem Eingang (12) in Fließrichtung des dritten Fluids (25) in dem Wärmetauscher (10) liegt, wobei das erste Fluid (14) nicht in dem Eingangsbereich (31) fließt.

9. Thermische Anordnung (30) nach Anspruch 8,
**dadurch gekennzeichnet, dass** der Wärmetauscher (10) einen thermischen Schutz (19) aufweist, der zumindest teilweise zwischen der Leitung (21) und dem Wärmetauscher (10) liegt, wobei der thermische Schutz (19) einen thermischen Wirkungsgrad aufweist, der hinter dem Eingangsbereich (31) beginnt und bis zum Ausgang (13) abnimmt, wobei der thermische Austausch ausschließlich durch Konvektion zwischen der Leitung (21) und dem dritten Fluid (25) in dem Eingangsbereich (31) erhalten wird, wobei dann jenseits des Eingangsbereichs (31) der Wärmetausch erhalten wird durch Strahlung zwischen der Leitung (21) und dem ersten Fluid (14), durch Konvektion zwischen der Leitung (21) und dem dritten Fluid (25) und durch Konvektion zwischen dem dritten Fluid (25) und dem ersten Fluid (14).

10. Thermische Anordnung (30) nach einem der Ansprüche 1 bis 9,
**dadurch gekennzeichnet, dass** die hintere Hülle (17) eine konvergente Form aufweist, die in Berührung mit einem Umfangsabschnitt einer Strömung des zweiten Fluids (15) am Ausgang der Leitung (21) steht, und gegenüber der Leitung (21) übersteht, um das dritte Fluid (25) mit dem zweiten Fluid (15) in Kontakt zu bringen.

11. Thermische Anordnung (30) nach einem der Ansprüche 1 bis 10,
**dadurch gekennzeichnet, dass** das dritte Fluid (25) Umgebungsluft ist.

12. Thermische Anordnung (30) nach einem der Ansprüche 1 bis 11,
**dadurch gekennzeichnet, dass** die Leitung (21) ein Abgasrohr eines Verbrennungsmotors (20) ist, und das zweite Fluid (15) aus den Abgasen gebildet wird.

13. Heizsystem (50) eines Fahrzeugs (1), wobei das Fahrzeug (1) mit einer Kabine (2) und mindestens einem Verbrennungsmotor (20) versehen ist, wobei das Heizsystem (50) mindestens ein Leitungssystem (53) aufweist, in dem ein Wärmeübertragungsfluid fließt, ein Mittel (51) zum Bewegen des Wärmeübertragungsfluids und mindestens ein Heizelement (52), in dem das Wärmeübertragungsfluid fließt, um die Heizung der Kabine (2) zu gewährleisten, **dadurch gekennzeichnet, dass** das Heizsystem (50) eine thermische Anordnung (30) nach Anspruch 12 aufweist, die es ermöglicht, das Wärmeübertragungsfluid wieder aufzuheizen, wobei das Wärmeübertragungsfluid das erste Fluid (14) des Wärmetauschers (10) ist.

14. Heizsystem (50) nach Anspruch 13,
**dadurch gekennzeichnet, dass** das Fahrzeug (1) ein Drehflügel-Luftfahrzeug ist, der Verbrennungsmotor (20) ein Turbomotor ist und die Leitung (21) aus mindestens einem Auspuffrohr mindestens eines Turbomotors (20) besteht.

## Claims

1. Thermal arrangement (30) comprising an annular heat exchanger (10) and a conduit (21), said exchanger (10) in which a first fluid (14) circulates being positioned around said conduit (21) in which a second fluid (15) circulates, said second fluid (15) exiting from said conduit (21) via an opening (23) of said conduit (21), a third fluid (25) circulating in said exchanger (10) from an inlet (12) of said exchanger (10) towards an outlet (13) of said exchanger (10),
**characterised in that** said exchanger (10) comprises a rear casing (17) situated at said outlet (13) and directing said third fluid (25) towards said second fluid (15) exiting via said opening (23), the second fluid (15) then generating by "Coanda" effect a circulation of said third fluid (25) in said exchanger (10), a thermal exchange taking place between said conduit (21), said third fluid (25) and said first fluid (14).

2. Thermal arrangement (30) according to claim 1,
**characterised in that** said thermal exchange is constituted at least by a thermal exchange by convection between said conduit (21) and said third fluid (25).

3. Thermal arrangement (30) according to any one of claims 1 to 2,
**characterised in that** said thermal exchange is constituted at least by a thermal exchange by radiation between said conduit (21) and said first fluid (14).

4. Thermal arrangement (30) according to any one of claims 1 to 3,
**characterised in that** said thermal exchange is constituted at least by a thermal exchange by convection between said third fluid (25) and said first fluid (14).

5. Thermal arrangement (30) according to any one of claims 1 to 4,
**characterised in that** said exchanger (10) comprises a thermal protection (19) positioned at least partially between said conduit (21) and said exchanger (10) in order to limit said thermal exchange of said conduit (21).

6. Thermal arrangement (30) according to claim 5,
**characterised in that** said thermal protection (19) is constituted by at least one thermal screen formed of one or more elements chosen from a list comprising a material of a metal foam type, concentric cylindrical plates, a honeycomb structure.

7. Thermal arrangement (30) according to any one of claims 5 to 6,
**characterised in that** said thermal protection (19) has a thermal effectiveness which increases from said inlet (12) towards said outlet (13), said thermal exchange being essentially obtained on the one hand by radiation between said conduit (21) and said first fluid (14) and on the other hand by convection between said conduit (21) and said third fluid (25) in an inlet zone (31) of said exchanger (10) while beyond said inlet zone (31), said thermal exchange is obtained by radiation between said conduit (21) and said first fluid (14), by convection between said conduit (21) and said third fluid (25) and by convection between said third fluid (25) and said first fluid (14), said inlet zone (31) being formed by a zone situated in said exchanger (10) just after said inlet (12) in the direction of circulation of said third fluid (25) in said exchanger (10).

8. Thermal arrangement (30) according to any one of claims 1 to 6,
**characterised in that** said exchanger (10) comprising in an inlet zone (31) of said exchanger (10) a front casing (18), the thermal exchange is only obtained in said inlet zone (31) by convection between said conduit (21) and said third fluid (25), said inlet zone (31) being formed by a zone situated in said exchanger (10) just after said inlet (12) in the direction of circulation of said third fluid (25) in said exchanger (10), said first fluid (14) not circulating in said inlet zone (31).

9. Thermal arrangement (30) according to claim 8,
**characterised in that**, said exchanger (10) comprising a thermal protection (19) positioned at least partially between said conduit (21) and said exchanger (10), said thermal protection (19) has a thermal effectiveness which starts beyond said inlet zone (31) and decreases up to said outlet (13), said thermal exchange being only obtained by convection between said conduit (21) and said third fluid (25) in said inlet zone (31), then beyond said inlet zone (31) said thermal exchange being obtained by radiation between said conduit (21) and said first fluid (14), by convection between said conduit (21) and said third fluid (25) and by convection between said third fluid (25) and said first fluid (14).

10. Thermal arrangement (30) according to any one of claims 1 to 9,
**characterised in that** said rear casing (17) has a convergent shape which is in contact with a peripheral portion of a flow of said second fluid (15) exiting from said conduit (21) and which extends beyond said conduit (21) in order to bring said third fluid (25) into contact with said second fluid (15).

11. Thermal arrangement (30) according to any one of claims 1 to 10,
**characterised in that** said third fluid (25) is the ambient air.

12. Thermal arrangement (30) according to any one of claims 1 to 11,
**characterised in that** said conduit (21) is a conduit (21) for discharging the exhaust gases from a thermal engine (20) and said second fluid (15) is formed by said exhaust gases.

13. Heating system (50) for heating a vehicle (1), said vehicle (1) being provided with a cabin (2) and with at least one thermal engine (20), said heating system (50) comprising at least one pipeline (53) in which a heat transfer fluid circulates, a means for circulating (51) said heat transfer fluid and at least one heating element (52) in which said heat transfer fluid circulates in order to ensure the heating of said cabin (2),
**characterised in that** said heating system (50) comprises a thermal arrangement (30) according to claim 12 making it possible to heat said heat transfer fluid, said heat transfer fluid being said first fluid (14) of said exchanger (10).

14. Heating system (50) according to claim 13,
**characterised in that** said vehicle (1) is a rotary-wing aircraft, said thermal engine (20) is a turbine engine and said conduit (21) is constituted by at least one exhaust nozzle of at least one turbine engine (20).
